# EUROPEAN PATENT APPLICATION

(11) **EP 1 528 445 A2**
(43) Date of publication of application: **04.05.2005**
(21) Application number: 04255925.2
(22) Date of filing: 28.09.2004
(51) Int. Cl.: G05B 19/4068

(54) **Numerical controller**

(30) Priority: 08.10.2003 JP 2003349449
(71) Applicant: FANUC LTD, Minamitsuru-gun, Yamanashi 401-0597 (JP)
(72) Inventor: Maeda, Hideaki, c/o Fanuc Manshonharimomi, Minamitsuru-gun Yamanashi 401-0511 (JP); Ota, Yasuhiro, c/o Fanuc Manshonharimomi, Minamitsuru-gun Yamanashi 401-0511 (JP)
(74) Representative: Billington, Lawrence Emlyn

(57) **Abstract**

A numerical controller is provided, capable of shortening time taken for animation plotting a tool path of an NC program including minute motion commands. From the NC program, blocks are read one by one (S1), and an accumulated value of commanded motion distances from the last position of animation plotting is obtained by accumulating motion amounts (S3). Only when the accumulated value is a predetermined value or greater (S4), the accumulated value is cleared (S5) and a tool path up to a position given by the present command is drawn (S6). When blocks containing minute motion commands are in succession such that the accumulated value does not reach the predetermined value (S4), the animation plotting is not performed, and hence the time taken for the animation plotting is reduced to enable high-speed animation plotting. When the predetermined value is set to be a minimum unit (one dot) of display, a minute motion smaller than the minimum unit resulting in no new drawing of the tool path is omitted from the animation plotting to eliminate wasteful graphics processing.

## Description

### BACKGROUND OF THE INVENTION

### 1. Field of the Invention

The present invention relates to a numerical controller having a function of animation plotting a tool path.

### 2. Description of Related Art

In a numerical controller having an animation plotting function, a tool path is drawn by the animation plotting by performing graphics processing on all motion commands given by an NC program. Even when blocks containing commands giving minute motions are in succession, graphics processing is performed on each of these motion commands for the animation plotting.

In the animation plotting, graphics processing required for displaying a tool path takes time. Even when blocks containing minute motion commands are in succession, the animation plotting is performed in the manner that graphics processing is performed for each of the motion commands. Hence, there is a problem that the animation plotting takes time.

Meanwhile, in a display such as a CRT display or a liquid crystal display on which the animation plotting is displayed, the minimum unit of display is determined by a dot. Hence, when a minute motion amount given by a command in a block of an NC program is smaller than the minimum display unit, namely one dot, even if graphics processing is performed on this command for drawing the tool path, an image drawn based on this command comes on what was drawn based on a command in the preceding block, and no new image is displayed. Hence, graphics processing on the command in the present block is a waste.

### SUMMARY OF THE INVENTION

The invention provides a numerical controller capable of shortening the time taken for animation plotting a tool path of an NC program including minute motion commands.

According to one aspect of the invention, the numerical controller comprises: means for successively reading motion commands from the NC program and successively obtaining motion amounts by the motion commands; and means for performing animation plotting each time when an accumulated value of commanded motion distances from a position where the animation plotting is last performed reaches a predetermined value.

According to another aspect of the invention, the numerical controller comprises: means for successively reading motion commands from the NC program and successively obtaining motion amounts by the motion commands; means for obtaining and storing an accumulated value of commanded motion distances from a position where the animation plotting is last performed by accumulating the motion amounts; means for determining whether or not the accumulated value of the commanded motion distances reaches a predetermined value; and means for performing the animation plotting to draw a tool path and clearing the accumulated value when it is determined that the accumulated value reaches the predetermined value. The predetermined value may be set by a parameter or a command in the NC program.

When minute motion commands are in succession, there can be such cases that, because of the minimum unit of display, even if an image is drawn based on the present command, it is indistinguishable from what was drawn before. In such cases, it is a waste to draw the tool path based on the present command. Thus, the animation plotting is not performed based on the present command, and hence graphics processing on the present command is omitted. Since the graphics processing on such commands can be omitted, the time taken for the animation plotting can be shortened.

### BRIEF DESCRIPTION OF THE DRAWINGS

FIG. 1 is a schematic diagram showing relevant parts of a numerical controller according to an embodiment of the invention; and
FIG. 2 is a flow chart showing the process of animation plotting in the embodiment.

### DETAILED DESCRIPTION

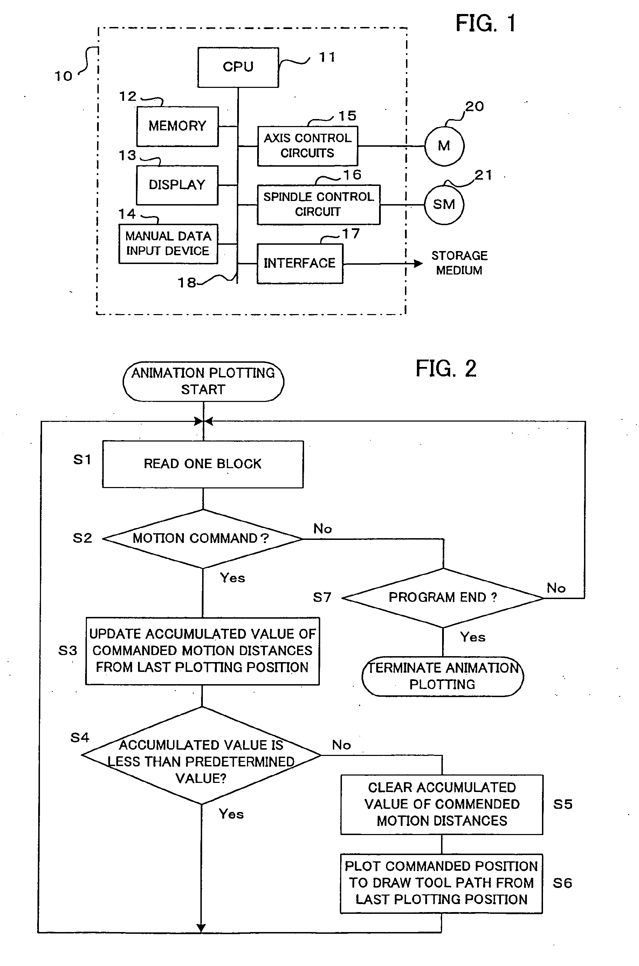

FIG. 1 is a schematic diagram showing relevant parts of a numerical controller 10 according to an embodiment of the invention. To a processor 11 that controls the numerical controller 10 as a whole, memory 12, a display 13, a manual data input device 14, axis control circuits 15 for individual axes, a spindle control circuit 16, an interface 17, etc. are connected by a bus 18. The memory 12 comprises ROM, RAM, nonvolatile RAM, etc., and stores system programs, NC machining programs, etc. The display 13 is a CRT display, a liquid crystal display or the like, on which a tool path given by an NC program is animation plotted according to the invention. The manual data input device 14 comprises a keyboard, a mouse, various command switches, etc., and is used for entering various commands and various types of data.

Each of the axis control circuits 15 controls a servomotor 20 for its associated feed axis of a machine tool to be controlled by the numerical controller 10. Specifically, the axis control circuits 15 are servo control circuits each feedback-controlling the position, speed, current, etc. for its associated servomotor 20. The spindle control circuit 16 drive-controls a spindle motor 21 of the machine tool. The interface 17 connects an external storage medium to the numerical controller. Through the interface 17, NC programs etc. are entered from the external storage medium.

The above-described structure of the numerical controller 10 does not differ from the structure of numerical controllers conventionally known. Only, in the present embodiment, software for animation plotting a tool path given by NC programs is stored in the memory 12.

FIG. 2 is a flow chart showing processing of animation plotting according to the embodiment. When an operator specifies an NC program and inputs an animation plotting command through the manual data input device 14, the processor 11 starts the processing of FIG. 2.

First, one block is read from the NC program (Step S1) and it is determined whether or not a command in the block is a motion command (Step S2). If the command is not a motion command, it is then determined whether or not the command is a program end command (Step S7). If not, the procedure returns to Step S 1 and the next block is read. If the command is a motion command, a motion amount is obtained from the motion command, and the obtained motion amount is added to a register storing an accumulated value of commanded motion distances from a position where the plotting is performed last time, to update the accumulated value of the commanded motion distances (Step S3). Then it is determined whether or not the accumulated value stored in the resistor is less than a predetermined value (Step S4). The predetermined value is set through the manual data input device 14 as a parameter. Alternatively, the predetermined value may be set by a command programmed in the NC program.

If it is determined in Step S4 that the accumulated value stored in the resister is the predetermined value or greater, the register is cleared (Step S5), and a tool position commanded in the present block is plotted to draw a tool path up to the present position of the tool as animation (Step S6). Then, the procedure returns to Step S1.

In the case where blocks containing commands giving minute motions smaller than a predetermined distance in succession and it is determined in Step S4 that the accumulated value of the commanded motion distances from the last plotted tool position obtained in Step S3 has not reached the predetermined value, the procedure returns to Step S1 without performing Steps S5 and S6, so that no image is drawn. When the accumulated value stored in the resistor becomes the predetermined value or greater, the processing of Steps S5 and S6 is performed so that the tool path up to the commanded position is drawn.

As stated above, when minute motion commands are in succession such that the accumulated value of the commanded motion distances from the last position of animation plotting does not reach the predetermined value, an image is not drawn, and therefore graphics processing is omitted. There are such cases that even if an image is drawn, it is indistinguishable from what was drawn before. In the case where the predetermined value is set to be a distance corresponding to one dot, namely the minimum display unit for the display 13, if the accumulated value from the last position of animation plotting has not reached the predetermined value, i.e. the distance corresponding to one dot, image drawing is not performed. In this case, even if the animation plotting is performed, the resulting image is same as the image drawn last time, because the distance to move is smaller than one dot. This is meaningless because no new part of a tool path is drawn. The present embodiment does not perform such meaningless image drawing, and omits the processing for this image drawing. By this, the time taken for the animation plotting is shortened.

It is to be noted that the predetermined value, by which whether or not the animation plotting should be performed is determined, may be set by an operator to be a desired value equal to or greater than the minimum unit of display, so that accuracy of tool-path drawing can be selected by the operator. The greater the predetermined value, the more roughly the tool path is displayed, and the smaller the reference distance, the more finely the tool path is drawn.

## Claims

1. A numerical controller having a function of animation plotting according to an NC program, comprising:
means for successively reading motion commands from the NC program and successively obtaining motion amounts by the motion commands; and
means for performing animation plotting each time when an accumulated value of commanded motion distances from a position where the animation plotting is last performed reaches a predetermined value.

2. A numerical controller according to claim 1, wherein the predetermined value is set by a parameter or a command in the NC program.

3. A numerical controller having a function of animation plotting according to an NC program, comprising:
means for successively reading motion commands from the NC program and successively obtaining motion amounts by the motion commands;
means for obtaining and storing an accumulated value of commanded motion distances from a position where the animation plotting is last performed by accumulating the motion amounts;
means for determining whether or not the accumulated value of the commanded motion distances reaches a predetermined value; and
means for performing the animation plotting to draw a tool path and clearing the accumulated value when it is determined that the accumulated value reaches the predetermined value.

4. A numerical controller according to claim 3, wherein the predetermined value is set by a parameter or a command in the NC program.
